Europäisches Patentamt

European Patent Office

Office européen des brevets

(19)

(11) Veröffentlichungsnummer: **0 086 263**
**B1**

(12) **EUROPÄISCHE PATENTSCHRIFT**

(45) Veröffentlichungstag der Patentschrift:
**27.08.86**

(21) Anmeldenummer: **82110632.5**

(22) Anmeldetag: **18.11.82**

(51) Int. Cl.⁴: **B 23 D 79/00, B 23 K 20/08**

(54) Vorrichtung zur Behandlung von Werkstücken in einer Brennkammer.

(30) Priorität: **12.02.82 DE 3204994**

(43) Veröffentlichungstag der Anmeldung:
**24.08.83 Patentblatt 83/34**

(45) Bekanntmachung des Hinweises auf die Patenterteilung:
**27.08.86 Patentblatt 86/35**

(84) Benannte Vertragsstaaten:
**DE FR GB IT**

(56) Entgegenhaltungen:
**WO - A - 81/00819**
**DE - A - 1 963 146**
**US - A - 3 432 912**
**US - A - 3 870 443**

(73) Patentinhaber: **ROBERT BOSCH GMBH, Postfach 50, D-7000 Stuttgart 1 (DE)**

(72) Erfinder: **Hieber, Ernst, Ing. grad., Stöckachstrasse 16, D-7253 Renningen (DE)**
Erfinder: **Kaden, Hans-Dieter, Holzwiesenstrasse 17, D-7410 Reutlingen (DE)**
Erfinder: **Martini, Helmut, Dipl.-Ing., Kalkofenweg 23/3, D-7252 Weil der Stadt 5 (DE)**
Erfinder: **Ziegler, Gerhard, Schwieberdinger-Strasse 43a, D-7000 Stuttgart 40 (DE)**

(74) Vertreter: **Brommer, Hans Joachim, Dr.-Ing. et al, Patentanwälte Dipl.-Ing. R. Lemcke Dr.-Ing. H.J. Brommer Amalienstrasse 28 Postfach 4026, D-7500 Karlsruhe 1 (DE)**

## Beschreibung

Stand der Technik

Die Erfindung geht aus von einer Vorrichtung nach der Gattung des Hauptanspruchs. Bei den besonders in Bezug genommenen bekannten Maschinen zum thermischen Entgraten findet unter dem Einfluss von Wärme ein chemischer Prozess statt. Das zu behandelnde Werkstück wird mit Sauerstoff oxidiert bzw. verbrannt und dadurch abgetragen. Der zum Entgraten notwendige Hitzeschock wird durch das Abbrennen eines Brenngas-Sauerstoff-Gemisches erzeugt. Um die notwendige Energie freisetzen zu können, muss das Gasgemisch vor dem Entzünden komprimiert werden. Dabei gilt, je höher der Druck, umso grösser die Energie und umso stärker die Entgratwirkung. Die beim Verbrennungsvorgang auftretenden Verbrennungstemperaturen des Gases liegen im Bereich von 2500 bis 3500 °C. Mit der Erhöhung des Druckes steigt die pro Volumeneinheit freigesetzte Wärmemenge. Die in der Brennkammer auftretenden Drücke des Brenngas-Sauerstoff-Gemisches liegen bei bis zu 60 bar bei Füllung der Brennkammer.

Bekannte Anlagen zur Behandlung von Werkstücken in einer Brennkammer, insbesondere bekannte thermische Entgratanlagen werden mit verschiedenen Entgratkammergrössen angeboten. Bei der durch die Anmelderin bekanntgewordenen sogenannten «C-Bauweise» der Anlage (das Maschinengestell hat die Form des Buchstaben C) sind Entgratkammern z.B. mit einem Durchmesser von 170, 200, 250 mm und einer Kammerhöhe von 150 mm vorgesehen. Bei der sogenannten «Portalbauweise» (siehe Fig.) werden Entgratkammern von maximal 320 mm Durchmesser und 300 mm Kammerhöhe verwendet.

Die Grösse der Entgratkammer ist abhängig von dem zu behandelnden Werkstück bzw. der Werkstückmenge und beeinflusst z.B. die für den Entgratvorgang notwendige Energie.

Bei bekannten Einrichtungen der eingangs genannten Art wurde das Maschinengestell an die Grösse der Entgratkammer angepasst. Am Beispiel der «Portalbauweise» hatte demnach eine Entgratanlage mit kleiner Entgratkammer niedrigere Tragsäulen als eine Anlage mit grosser Entgratkammer. Demzufolge hatte jede Entgratkammergrösse ein zugehöriges, passendes Maschinengestell. Dies hat jedoch zur Folge, dass die Flexibilität derartiger Anlagen sehr gering war. Das Betreiben einer Grossanlage ist unwirtschaftlich, wenn für den gleichen Vorgang auch eine kleine Anlage ausreichen würde, denn die grosse Anlage hat einen entsprechend höheren Energiebedarf. Die Praxis hat gezeigt, dass die Verwendung von unterschiedlichen Kammergrössen sinnvoll und wirtschaftlich ist.

Vorteile der Erfindung

Die erfindungsgemässe Vorrichtung mit den kennzeichnenden Merkmalen des Hauptanspruchs hat demgegenüber den Vorteil, dass die Anlage wesentlich vielseitiger verwendbar ist, da die Arbeitskammer sehr schnell umgerüstet und durch eine andere, an das Werkstück angepasste Arbeitskammer ersetzt werden kann. Hieraus ergeben sich optimale Arbeitsergebnisse sowie minimale Betriebskosten, insbesondere hinsichtlich des Brenngas- und Sauerstoffgemisches.

Die Erfindung geht von der Erkenntnis aus, dass zu jeder Werkstückgrösse eine optimale Kammergrösse zugehörig ist. Bei einem einheitlich ausgebildeten Maschinengestell werden die durch verschiedene Kammergrössen auftretenden Abmessungs-Unterschiede durch entsprechend angepasste Adapter ausgeglichen. Das Maschinengestell ist demnach in seinen Abmessungen für die grösste Arbeitskammer ausgelegt. In diesem Fall wird kein Adapter verwendet.

Ist es sinnvoll eine kleinere Arbeitskammer zu verwenden, so wird je nach Kammergrösse ein entsprechend angepasster Adapter, d.h. eine Art Zwischenring verwendet, um die kleinere Arbeitskammer an das grössere Maschinengestell anzupassen. Je kleiner die Arbeitskammer, umso grösser ist der Adapter ausgeführt. Abgesehen von der grössten Arbeitskammer hat demnach jede Arbeitskammergrösse einen zugehörigen Adapter. Hierdurch können auch mit einer grossen Anlage wirtschaftlich kleinere Werkstücke bearbeitet werden. Der Adapter ist mit entsprechenden Anschlussflanschen und Zentrierflächen derart ausgelegt, dass ein rasches Umrüsten der Gesamtanlage auf unterschiedliche Arbeitskammern möglich ist.

Zwar ist durch die WO 81/00 819 eine Entgratkammer für thermisches Entgraten mit den Merkmalen des Oberbegriffes von Anspruch 1 bekannt, in der auch die Verwendung eines oberen und eines unteren Adapters beschrieben ist. Dabei handelt es sich aber nicht um Adapter im Sinne der vorliegenden Anmeldung, sondern um reine Stützplatten. Sie sind notwendig, weil bei der bekannten Entgratkammer der Schliessteller und das Entgratkammer-Oberteil zweiteilig ausgebildet sind und die verschleissgefährdeten Innenteile einer äusseren Abstützung gegenüber Verformungen aufgrund der hohen Temperatur- und Druckbelastungen beim Entgratvorgang bedürfen. Diese Verformungen werden durch die als Stützplatten fungierenden Adapter begrenzt. Sie sind funktionsnotwendige Bestandteile der Entgratkammer und als nicht austauschbare, in der Maschine verbleibende Teile der Entgratkammer vorgesehen, wohingegen die innen liegenden, verschleissgefährdeten Teile leicht auswechselbar sind.

Das Problem, dass unterschiedlich grosse Entgratkammern jeweils ein in seiner Grösse darauf abgestimmtes Maschinengestell benötigen, ist in dieser Schrift nicht angesprochen.

Durch die in den Unteransprüchen aufgeführten Massnahmen sind vorteilhafte Weiterbildungen bzw. Verbesserungen der im Hauptanspruch angegebenen Vorrichtung möglich. Besonders zweckmässig ist die Verwendung eines an sich bekannten Codiersystems, wie es z.B. von der Anmelderin vom Gebiet der Montagetechnik her bekannt ist. Dadurch lässt sich der Explosionsdruck, d.h. der Fülldruck des Systems, in einfacher Weise an die unterschiedliche Arbeitskammer- bzw. Brennkammergrösse anpassen. Wie bereits erwähnt, gilt dabei die Regel, dass die Entgratwirkung um so stärker ausfällt, je höher der Druck in der Kammer ist.

Bei bekannten Einrichtungen werden die Gaskomponenten in je einem Dosierzylinder eingelassen und mittels einer Druckvorrichtung unter erheblicher Komprimierung in die Arbeitskammer geleitet. Die Kompression der Gaskomponenten ist dabei gleich gross und entspricht gegen Ende der Füllung dem Druck, der im Arbeitsraum für den optimalen Brennvorgang erforderlich ist. Mit Erhöhung des Druckes steigt die pro Volumeneinheit freigesetzte Wärmemenge. Die mittels der Dosier- und Druckanlage einzufüllende Gasmenge des Brennstoff-Sauerstoff-Gemisches ist jedoch abhängig von der Grösse der Arbeitskammer sowie von der Grösse des Werkstückes.

Das Codiersystem ist zweckmässig an der jeweiligen Arbeitskammer angebracht und dient der Informationsübermittlung der Kammergrösse (Durchmesser und Höhe) an die Steuerung. Bei Inbetriebnahme der Anlage werden dieser Steuerung ausserdem Daten wie Werkstückdichte, Werkstückgewicht, Art des Gasgemisches sowie der gewünschte Kammerfülldruck am Bedienpult eingegeben. Die Kammergrösse wird, um Fehler auszuschliessen, vom Kodiersystem automatisch an die Steuerung übertragen.

Die Steuerung errechnet aus diesen Daten den erforderlichen Dosierhub für Sauerstoff- und Brenngasdosierzylinder. Dies ist insofern von Bedeutung, da die Dosierzylinder aus Sicherheitsgründen nur die effektiv zum Füllen der Brennkammer notwendigen Gasmengen ansaugen, danach hydraulisch in die Brennkammer einstossen und sich somit vollständig entleeren. Das Kodiersystem verhindert also eine Überladung der jeweiligen Kammer.

Eine vorteilhafte Ausbildung des Kodiersystems sieht vor, dass durch verschiebbare Kodierbolzen und/oder Bedämpfungsflächen an der Arbeitskammer der jeweilige Zustand bzw. die jeweilige Art der Arbeitskammer mittels Sensoren erfassbar und auswertbar ist. Dieser einfache Aufbau der Anlage im Zusammenhang mit dem Kodiersystem ermöglicht eine sichere und optimale Arbeitsweise der Anlage bei Verwendung von unterschiedlich grossen Arbeitskammern.

Aus Sicherheitsgründen ist es weiterhin besonders vorteilhaft, dass beispielsweise durch mechanische Passelemente sichergestellt ist, dass nicht versehentlich nicht zusammengehörige Teile, wie z.B. ein hoher Adapter mit einer hohen Brennkammer montiert werden.

Die erfindungsgemässe Einrichtung ist selbstverständlich nicht auf eine Anlage zum thermischen Entgraten von Werkstücken beschränkt, da eine derartige Anlage zahlreiche Anwendungsgebiete hat. So kann mit der in der Beschreibung näher dargestellten Anlage ebenso z.B. das «Retikulieren von Schaumstoff» nach DE-C 1 504 096 oder das Verfahren zum Entfernen von zusammenhängenden porösen Formen» nach DE-C 2 322 760 durchgeführt werden. Massgeblich ist der Bearbeitungsvorgang an einem Werkstück mittels eines explosiven Gasgemisches in einer abgeschlossenen Kammer.

Zeichnung

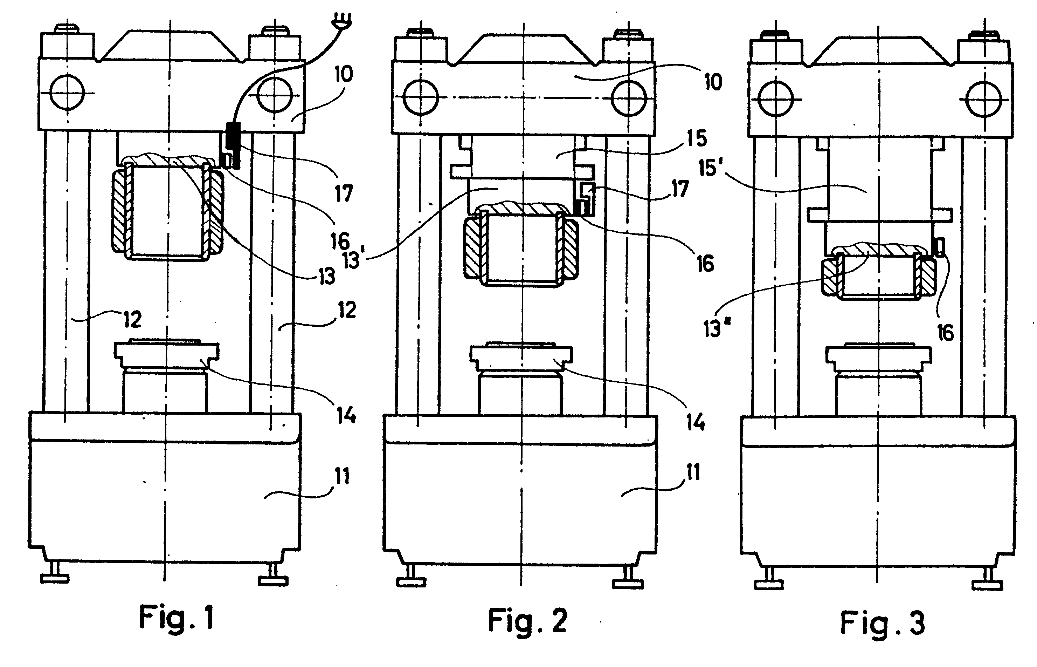

Ein Ausführungsbeispiel der Erfindung ist in der Zeichnung dargestellt und in der nachfolgenden Beschreibung unter Angabe weiterer Vorteile näher erläutert. Es zeigen die Figuren 1 bis 3 eine erfindungsgemässe Anlage mit drei unterschiedlich grossen Arbeitskammern.

Beschreibung des Ausführungsbeispiels

Die im weiteren beschriebene Vorrichtung bezieht sich auf eine Anlage zum thermischen Entgraten. In den Figuren 1 bis 3 ist eine derartige Anlage in der sogenannten «Portalbauweise» dargestellt. Selbstverständlich lässt sich die erfindungsgemässe Vorrichtung auch bei einer Anlage mit einem anderen Maschinengestell, z.B. einem «C-Gestell» anwenden.

Das in Fig. 1 dargestellte Maschinengestell besteht aus einem Oberteil 10 und einem Unterteil 11 welche durch Säulen 12 mit vorgespannten Zugankern verbunden sind. Das Maschinengestell nimmt die Entgratkammer-Schliesskraft und die bei der Zündung des Gasgemisches wirksamen Kräfte mit elastischer Verformung auf.

Am Oberteil 10 des Maschinengestells ist die Arbeits- bzw. Entgratkammer 13 befestigt. Das Unterteil 11 trägt den Schliessteller 14, der über eine im Unterteil 11 des Maschinengestells angeordnete, nicht näher dargestellte Hydraulikeinrichtung nach oben verschiebbar ist. Hierdurch wird die am Oberteil des Maschinengestells befestigte Entgratkammer 13 hermetisch mit dem Schliessteller 14 verschlossen.

Die für die jeweilige Entgrataufgabe erforderliche Gasmenge (Brenngas und Sauerstoff) wird je nach Grösse der Entgratkammer 13 über nicht näher dargestellte Gasdosierzylinder abgemessen und hydraulisch in die Entgratkammer eingestossen. In einem meist vorgeschalteten Mischblock werden die Gase gleichmässig gemischt und nach dem Verschliessen der Mischblockventile gezündet.

Das in Fig. 2 dargestellte Maschinengestell enthält eine gegenüber der Ausführungsform gemäss Fig. 1 kleinere Entgratkammer 13'. Wäre diese Entgratkammer 13' unmittelbar am Oberteil 10 des Maschinengestells befestigt, so würde der von dem Schliessteller 14 durchzuführende Hub nach oben unter Umständen nicht mehr ausreichen, um die Entgratkammer 13' mit dem Schliessteller 14 zu verschliessen. Die Anpassung der kleineren Entgratkammer 13' an das unveränderte Maschinengestell geschieht deshalb mittels eines Adapters 15, der zwischen Entgratkammer 13' und Oberteil 10 des Maschinengestells angeordnet ist.

Durch den Adapter kann demnach mit einheitlichem Gestell, d.h. mit konstanter Säulenhöhe gearbeitet werden. Zur Zentrierung wird dasselbe Prinzip wie bei der bekannten Entgratkammer verwendet, d.h. die am oberen Ende der Entgratkammer 13, angeordnete Aussparung dient als Zentrierfläche und befindet sich ebenso am oberen Ende des Adapters 15. Gleichermassen hat der Adapter am unteren Ende eine an sich bekannte Zentrierscheibe, in welche die Aussparung der Entgratkammer hineinpasst.

In Fig. 3 ist eine nochmals verkleinerte Entgratkammer 13″ dargestellt. Für diese Entgratkammer ist zur Anpassung der Teile an das Maschinengestell ein noch grösserer Adapter 15′ notwendig. Die Anschlussflansche der Entgratkammern 13, 13′, 13″ sind an die Adapter 15, 15′ und an das Maschinengestell 10 angepasst. Ebenso enthalten die Teile entsprechende Zentrierflächen zur genauen Anpassung. Durch nicht näher dargestellte mechanische Passelemente oder dergleichen im Bereich der Flanschflächen soll sichergestellt werden, dass nicht versehentlich z.B. ein hoher Adapter 15′ mit einer hohen Entgratkammer 13 montiert wird.

Die erfindungsgemässe Vorrichtung ist mit einem Kodiersystem, bestehend aus einem Kodierkopf 16 und einem Lesekopf 17 versehen. Der Kodierkopf dient zum Setzen und Löschen von Informationen z.B. durch Drücken von Kodierbolzen in einem Kodierspeicher. Der Lesekopf 17 dient zum Abtasten und Auswerten der im Kodierkopf 16 enthaltenen Informationen. Dieses Informations-Erfassungssystem ist aus der Montagetechnik an sich bekannt und u.a. in verschiedenen Patentanmeldungen der Anmelderin beschrieben.

Bei der erfindungsgemässen Einrichtung hat die Verwendung einer derartig bekannten Kodiereinrichtung jedoch den Vorteil, dass die für die Arbeitsweise der Anlage notwendigen Parameter, d.h. z.B. Füllvolumen, Fülldruck usw. der verschieden grossen Entgratkammern 13, 13′, 13″ vorprogrammiert werden können. Jede Entgratkammergrösse ist demnach mittels des Kodierkopfes 16 unterschiedlich vorprogrammiert, sodass mittels des Lesekopfs 17 die jeweils passenden Arbeitsvorgänge durchgeführt werden können. Der Lesekopf 17 ist auf den Kodierkopf 16 aufsteckbar, sodass zu einer Entgratanlage jeweils nur ein Lesekopf 17 notwendig ist, der den Informationsinhalt der unterschiedlich programmierten Kodierköpfe – je nach Grösse der Entgratkammer – erfasst und auswertet.

Die Information des Kodiersystems dient hauptsächlich der Einstellung der Dosier- und Druckanlage für das Brenngas- und Sauerstoffgemisch, sodass je nach Grösse der Entgratkammer 13, 13′, 13″ das richtige Gasvolumen und der Soll-Fülldruck einstellbar sind.

**Patentansprüche**

1. Vorrichtung zur Behandlung von Werkstücken in einer Brennkammer mittels Temperatur- und Druckstössen durch Zünden eines Gasgemisches, insbesondere in einer thermischen Entgratanlage, mit einer in einem Maschinengestell (10, 11, 12) montierten Arbeitskammer (13, 13′, 13″), die an ihrer Unterseite durch einen vertikal verfahrbaren Schliesszylinder verschliessbar ist, dadurch gekennzeichnet, dass zur Verwendung eines Maschinengestells (10, 11, 12) gleichbleibender Grösse jeder von der Maximalgrösse (13) abweichenden Arbeitskammer (13′, 13″) ein ihr angepasster Adapter (15, 15′) zugeordnet ist, der zwischen der Arbeitskammer (13′, 13″) und dem Maschinengestell (10) montierbar ist.

2. Vorrichtung nach Anspruch 1, dadurch gekennzeichnet, dass das Maschinengestell (10), die Arbeitskammer (13, 13′, 13″) und der Adapter (15, 15′) einander angepasste Anschlussflansche und Zentrierflächen aufweisen.

3. Vorrichtung nach Anspruch 1 oder 2, dadurch gekennzeichnet, dass mechanische Passelemente oder dergleichen eine unzulässige Kombination der Maschinenteile (10, 13, 15) verhindern.

4. Vorrichtung nach einem oder mehreren der vorhergehenden Ansprüche 1 bis 3, dadurch gekennzeichnet, dass die Arbeitskammer (13, 13′, 13″) mit einem Kodiersystem (16, 17) zur Übermittlung der Arbeitskammergrösse versehen ist.

5. Vorrichtung nach Anspruch 4, dadurch gekennzeichnet, dass an der Arbeitskammer (13, 13′, 13″) ein Kodierkopf (16) angeordnet ist, der mechanisch und/oder elektronisch mittels eines aufsteckbaren Lesekopfes (17) abtastbar ist.

6. Vorrichtung nach Anspruch 4 oder 5, dadurch gekennzeichnet, dass mittels des Kodiersystems (16, 17) der Soll-Fülldruck und das Soll-Gasvolumen des Brenngas-Sauerstoff-Gemisches in der Arbeitskammer (13, 13′, 13″) einstellbar ist.

**Claims**

1. Apparatus for treating workpieces in a combustion chamber by means of temperature and pressure surges by ignition of a gas mixture, particularly in a thermal deburring devide, with a work chamber (13, 13′, 13″) which is fitted in a machine frame (10, 11, 12) and is closable on its underside by a vertically movable closing cylinder, characterised in that, for the use of a machine frame (10, 11, 12) of constant size, each work chamber (13′, 13″) deviating from the maximum size (13) is assigned an adapter (15, 15′) which matches it and can be fitted between the work chamber (13′, 13″) and the machine frame (10).

2. Apparatus according to Claim 1, characterised in that the machine frame (10), the work chamber (13, 13′, 13″) and the adapter (15, 15′) have matched connecting flanges and centring surfaces.

3. Apparatus according to Claim 1 or 2, characterised in that mechanical fitting elements or the like prevent an inadmissible combination of the machine parts (10, 13, 15).

4. Apparatus according to one or more of the preceding Claims 1 to 3, characterised in that the work chambers (13, 13′, 13″) are provided with a coding system (16, 17) for conveying the work chamber size.

5. Apparatus according to Claim 4, characterised in that a coding head (16) is arranged on the work chamber (13, 13', 13'') and can be scanned mechanically and/or electronically by means of an attachable read head (17).

6. Apparatus according to Claim 4 or 5, characterised in that, by means of the coding system (16, 17), the set filling pressure and the set gas volume of the combustion gas/oxygen mixture can be adjusted in the work chamber (13, 13', 13'').

**Revendications**

1. Dispositif pour le traitement de pièces dans une chambre de combustion au moyen de chocs de température et de pression par inflammation d'un mélange gazeux, en particulier dans une installation d'ébavurage thermique, comportant une chambre de travail (13, 13', 13'') montée dans un bâti de machine (10, 11, 12) et qu'un cylindre obturateur, mobile verticalement, peut obturer à sa face inférieure, caractérisé en ce, que pour employer un bâti de machine (10, 11, 12) de taille constante, à chacune des chambres de travail (13', 13'') s'écartant de la taille maximale (13), correspond un adaptateur (15, 15') qui lui est adapté et que l'on peut monter entre la chambre de travail (13', 13'') et le bâti de machine (10).

2. Dispositif selon la revendication 1, caractérisé en ce que le bâti de machine (10), la chambre de travail (13, 13', 13'') et l'adaptateur (15, 15') présentent des flasques de raccordement et des surfaces de centrages adaptés l'un à l'autre.

3. Dispositif selon la revendication 1 ou la revendication 2, caractérisé en ce que des éléments mécaniques d'adaptation ou analogues interdisent une combinaison non autorisée des parties de la machine (10, 13, 15).

4. Dispositif selon l'une ou plusieurs des revendications précédentes 1 à 3, caractérisé en ce que la chambre de travail (13, 13', 13'') comporte un système de codage (16, 17) pour transmettre la taille de la chambre de travail.

5. Dispositif selon la revendication 4, caractérisé en ce que, sur la chambre de travail (13, 13'') est disposé une tête de codage (16) que l'on peut lire mécaniquement et/ou électroniquement au moyen d'une tête de lecture enfichable (17).

6. Dispositif selon la revendication 4 ou la revendication 5, caractérisé en ce qu'au moyen du système de codage (16, 17), on peut régler la pression de remplissage prescrite et le volume de gaz prescrit du mélange gaz combustible-oxygène dans la chambre de travail (13, 13', 13'').

Fig. 1

Fig. 2

Fig. 3

0 086 263